# EUROPEAN PATENT APPLICATION

(11) **EP 3 031 650 A1**
(43) Date of publication of application: **15.06.2016**
(21) Application number: 15199177.5
(22) Date of filing: 10.12.2015
(51) Int. Cl.: B60K 15/03, B29C 51/12, B29C 65/00

(54) **FUEL TANK AND METHOD FOR PRODUCING THE SAME**

(30) Priority: 12.12.2014 JP 2014252292
(71) Applicant: Toyota Jidosha Kabushiki Kaisha, Toyota-shi, Aichi-ken 471-8571 (JP)
(72) Inventor: NAKASHIMA, Tomoki, Toyota-shi, Aichi-ken, 471-8571 (JP); KATAOKA, Chiaki, Toyota-shi, Aichi-ken, 471-8571 (JP); TANABE, Daisuke, Toyota-shi, Aichi-ken, 471-8571 (JP)
(74) Representative: Winter, Brandl, Fürniss, Hübner, Röss, Kaiser, Polte - Partnerschaft mbB

(57) **Abstract**

A fuel tank (32) has a fuel tank body (34) made of thermoplastic resin, a mounted part (reinforcement (38)) that is mounted on the fuel tank body (34) and is formed of a material different from a material of the fuel tank body (34), a caulking portion (46) formed in the fuel tank body (34) so as to fix the mounted part to the fuel tank body (34), and a support member (50) formed separately from the fuel tank body (34) and attached to the fuel tank body (34) so as to support the mounted part.

## Description

### BACKGROUND OF THE INVENTION

### 1. Field of the Invention

The invention relates to a fuel tank and a method for producing the fuel tank.

### 2. Description of Related Art

A method for producing a plastic hollow body with a built-in part is known in which the built-in part is placed in an open gap between metal molds, and the molds are closed around parisons and the built-in part, so that the parisons are formed by blow molding into the profile of a product within a cavity surrounded by the molds (see, for example, Published Japanese Translation of PCT Application No. 2009-525893 (JP 2009-525893 A)).

In the method described in JP 2009-525893 A, the built-in part is pressed against an inner wall of the product which is in a plastic state during or immediately after molding, so that a part of a plastic material of the product inner wall, which is in a plastic state, flows through at least one hole of the built-in part until it reaches the back of the hole.

On a fuel tank body made of thermoplastic resin, a mounted part or article made of a material different from the thermoplastic resin that forms the fuel tank body may be mounted. When the fuel tank body and the mounted part are formed of different types of materials, it is difficult to weld the fuel tank body and the mounted part to each other. Accordingly, while the thermoplastic resin that forms the fuel tank body is in a fused state, the mounted part may be pressed against the thermoplastic resin of the fuel tank body, for example, so that a part of the thermoplastic resin is deformed so as to form a fixing portion. Namely, the mounted part is fixed to the fuel tank body, by means of the fixing portion formed by deforming a part of the fuel tank body.

However, when the fixing portion is formed, there is a possibility that the fixing portion is deformed due to the own weight of the mounted part, since the thermoplastic resin of the fixing portion is in the fused state.

### SUMMARY OF THE INVENTION

This invention provides a fuel tank in which a fixing portion for fixing a mounted part made of a material different from a material of a fuel tank body, to the fuel tank body made of thermoplastic resin, is formed, and deformation of the fixing portion is curbed. The invention also provides a method for producing the fuel tank.

A fuel tank according to a first aspect of the invention includes a fuel tank body that is made of thermoplastic resin, and is adapted to store fuel in the fuel tank body, a mounted part that is mounted on the fuel tank body, and is formed of a material that is different from a material of the fuel tank body, a fixing portion formed in the fuel tank body by deforming a part of the thermoplastic resin that forms the fuel tank body, so as to fix the mounted part to the fuel tank body, and a support member formed separately from the fuel tank body and the fixing portion, the support member being attached to the fuel tank body and supporting the mounted part.

In the fuel tank according to the first aspect of the invention, the mounted part is fixed to the fuel tank body, by means of the fixing portion formed in the fuel tank body. The fuel tank has the support member for supporting the mounted part. Since the load of the mounted part is distributed to the fixing portion and the support member, during molding of the fuel tank body, the fixing portion is less likely or unlikely to be deformed, as compared with a structure in which the mounted part is not supported by the support member.

Since the support member is a separate or different body from the fuel tank body, there is no need to form the fuel tank body with the support member when forming the fuel tank body, and the fuel tank can be easily produced. Since the support member is attached to the fuel tank body, the load of the mounted part can be surely applied to the fuel tank body. Furthermore, the position of the support member relative to the fuel tank body is determined, so that the mounted part can be supported with high reliability.

In the fuel tank according to the first aspect of the invention, the support member may be embedded in and attached to the fuel tank body.

Since the support member is embedded in and attached to the fuel tank body, the load of the mounted part can be stably applied to the fuel tank body via the support member.

The support member and the fuel tank body may have contact surfaces that are in contact with each other and are made of different types of materials. In this case, protrusions may be formed on one of the contact surfaces of the support member and the fuel tank body, and recesses in which the protrusions are fitted or received may be formed in the contact surface of the other. With this arrangement, even if the contact surfaces of the support member and the fuel tank body are made of different types of materials, a sufficiently large contact area is ensured, due to fitting of the protrusions in the recesses, and the support member is likely to be kept embedded in the fuel tank body.

In the fuel tank according to the first aspect of the invention, the support member and the fuel tank body may have contact surfaces that are in contact with each other, and are formed of the same material.

With this arrangement, the support member and the fuel tank body can be welded to each other at their mutually contacting surfaces.

In the fuel tank according to the first aspect of the invention, the support member may be a separate body from the mounted part, and may be coupled to the mounted part.

Since the support member is a separate body from the mounted part, the shape of the support member can be determined with a high degree of freedom. Also, since the support member is coupled to the mounted part, the support member can surely support the load of the mounted part, without being carelessly detached or separated from the mounted part.

The fuel tank as described above may further include a coupling member that couples the mounted part with the support member.

The use of the coupling member makes it easy to couple the mounted part with the support member.

In the fuel tank as described above, the coupling member may have an engaging portion provided on one of the mounted part and the support member, and an engaged portion provided on the other of the mounted part and the support member.

The coupling member, which simply consists of the engaging portion and the engaged portion, can couple the mounted part with the support member with the simple structure.

The fuel tank as described above may further include a fastened seat that is formed on the mounted part and is fixed to the fuel tank body by the fixing portion, and the engaged portion may have a pair of erected portions that extend upward from the fastened seat, and a connecting portion that connects the erected portions with each other. The support member may include a support plate body in the form of a flat plate attached to the fuel tank body, and an opposed plate that cooperates with the support plate body to form a gap in which the connecting portion is received. The engaging portion may be a claw piece that protrudes from one of the support plate body and the opposed plate to the other, and the claw piece may be engaged with the connecting portion received in the gap.

Since the fastened seat is formed on the mounted part, the mounted part can be fixed by the fixing portion to the fuel tank body, using the fastened seat.

The engaged portion has the pair of erected portions that extend upward from the fastened seat, and the connecting portion that connects the erected portions with each other. The term "upward" used herein means an upward direction of the vehicle vertical direction in a condition where the fuel tank body is installed on the vehicle.

Once the connecting portion is received in the gap between the support plate body of the support member and the opposed plate, the connecting portion is engaged with the claw piece. Therefore, the engaged portion is less likely or unlikely to fall off from the gap.

The fuel tank according to the first aspect of the invention may further include a fastened seat that is formed on the mounted part and is fixed to the fuel tank body by the fixing portion, and the support member may include an engaging pin that is inserted through and engaged with an engaging hole of the fastened seat.

By using the fastened seat, the mounted part can be fixed by the fixing portion to the fuel tank body. Then, with a simple structure in which the engagement pin is inserted through and engaged with the engagement hole of the fastened seat, the mounted part can be supported by the support member.

In the fuel tank according to the first aspect of the invention, the support member may be at least one convex portion that protrudes from a contact surface of the mounted part which is in contact with the fuel tank body, and a support surface that supports each of the above-indicated at least one convex portion may be formed in a contact surface of the fuel tank body which is in contact with the contact surface of the mounted part.

The convex portion that protrudes from the contact surface of the mounted part is supported by the support surface formed in the contact surface of the fuel tank body, so that the mounted part is supported. If the convex portion is formed on the support member, the convex portion is pressed against the thermoplastic resin of the fuel tank body which is in a fused state, during production of the fuel tank body, for example, so that the support surface that supports the convex portion can be formed in the fuel tank body. To provide the support member, the convex portion is only required to be formed on the mounted part, resulting in a simple structure.

Furthermore, the convex portion is formed on the mounted part, and is formed integrally with the mounted part; therefore, as compared with the structure in which the support member is a separate body from the mounted part, sound is less likely or unlikely to be generated due to contact between the support member and the mounted part.

In the fuel tank as described above, the above-indicated at least one convex portion may be a plurality of convex portions.

With the plurality of convex portions thus used, the load of the mounted part is more likely to be distributed and supported, as compared with the structure having only one convex portion.

In the fuel tank as described above, the plurality of convex portions may be located at positions surrounding the fixing portion.

Since the load of the mounted part is more likely to be distributed around the fixing portion and supported, as compared with the structure in which the plurality of convex portions are unevenly located around the fixing portion, deformation of the fixing portion can be effectively curbed.

In the fuel tank according to the first aspect of the invention, the support member may support the mounted part in a direction along a mounting surface at which the mounted part is mounted on the fuel tank body.

Thus, even when the mounted part receives force in the direction along the mounting surface, the mounted part can be supported by the support member in the direction along the mounting surface, and the position of the mounted part relative to the fuel tank body is made stable.

A method for producing a fuel tank according to a second aspect of the invention includes the steps of pressing a mounted part to be mounted on a fuel tank body, against resin that forms the fuel tank body, while the resin is in a fused state, and forming a fixing portion in the fuel tank body and fixing the mounted part to the fuel tank body while supporting the mounted part against the fuel tank body, using a support member formed separately from the fuel tank body, and then forming the fuel tank body into a box shape.

Since the fixing portion is formed and the mounted part is fixed to the fuel tank body while the mounted part is being supported by the support member, the load of the support member is distributed to the fixing portion and the support member, and the fixing portion is less likely or unlikely to be deformed, as compared with the case where the mounted part is not supported.

Since the support member is formed separately from the fuel tank body, there is no need to form the support member on the fuel tank body when molding the fuel tank body, and the fuel tank can be easily produced.

In the method for producing the fuel tank according to the second aspect of the invention, the fixing portion may be formed, in a condition in which a mounting surface at which the mounted part is mounted on the fuel tank body extends in a vertical direction.

If the load of the mounted part is applied to the fixing portion in a condition where the mounting surfaces extends in the vertical direction, the fixing portion is likely to be deformed in a direction along the mounting surface. However, since the mounted part is supported by the support member, deformation of the fixing portion can be curbed.

In the method for producing the fuel tank as described above, during formation of the fixing portion, the support member may support the mounted part, at an upper side of a portion in which the fixing portion is formed.

As compared with a structure in which the support member supports the mounted part at the lower side of the portion in which the fixing portion is formed, a portion of the mounted part located on the upper side of the fixing portion is less likely or unlikely to rotate in a direction away from the mounting surface.

With the arrangements of the invention as described above, deformation of the fixing portion for fixing the mounted part to the fuel tank body made of thermoplastic resin can be curbed.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a perspective view showing a fuel tank as a first embodiment of the invention when it is cut along a vertical plane;
FIG. 2 is a partially enlarged, perspective view showing a mounted part of the fuel tank of the first embodiment, along with a part of a fuel tank body;
FIG. 3 is a partially enlarged, cross-sectional view, showing the fuel tank of the first embodiment;
FIG. 4 is a cross-sectional view showing a condition in which a fused resin sheet that provides the fuel tank of the first embodiment is set in a forming die;
FIG. 5 is a cross-sectional view showing a condition in which the fused resin sheet that provides the fuel tank of the first embodiment is inflated;
FIG. 6 is a cross-sectional view showing a condition in which the fused resin sheet that provides the fuel tank of the first embodiment is formed with extra-length portions;
FIG. 7 is a partially enlarged, cross-sectional view showing a condition in which the fused resin sheet that provides the fuel tank of the first embodiment is formed with an extra-length portion;
FIG. 8 is a partially enlarged, cross-sectional view showing a condition in which a caulking portion is being formed in the fused resin sheet that provides the fuel tank of the first embodiment;
FIG. 9 is a partially enlarged, cross-sectional view showing a condition in which the fuel tank body of the first embodiment is being detached from the forming die;
FIG. 10 is a circuit diagram showing a pneumatic circuit and an electric circuit of a molding device for forming the fuel tank of the first embodiment;
FIG. 11 is a partially enlarged, cross-sectional view showing a fuel tank as a second embodiment of the invention;
FIG. 12 is a partially enlarged, cross-sectional view showing a fuel tank as a third embodiment of the invention;
FIG. 13 is a partially enlarged, perspective view showing a mounted part of a fuel tank as a fourth embodiment of the invention, along with a part of a fuel tank body;
FIG. 14A is a partially enlarged, front view showing the vicinity of a fastened seat of the fuel tank of the fourth embodiment;
FIG. 14B is a partially enlarged, cross-sectional view taken along line B-B in FIG. 14A, showing the vicinity of the fastened seat of the fuel tank of the fourth embodiment;
FIG. 15 is a partially enlarged, cross-sectional view showing a condition in which a caulking portion is being formed in a fused resin sheet that provides the fuel tank of the fourth embodiment;
FIG. 16A is a partially enlarged, front view showing the vicinity of a fastened seat of a fuel tank as a fifth embodiment of the invention;
FIG. 16B is a partially enlarged, cross-sectional view taken along line B-B in FIG. 16A, showing the vicinity of the fastened seat of the fuel tank of the fifth embodiment;
FIG. 17 is a partially enlarged, perspective view showing a mounted part of a fuel tank as a sixth embodiment of the invention, along with a part of a fuel tank body;
FIG. 18A is a partially enlarged, front view showing the vicinity of a fastened seat of the fuel tank of the sixth embodiment;
FIG. 18B is a partially enlarged, cross-sectional view taken along line B-B in FIG. 18A, showing the vicinity of the fastened seat of the fuel tank of the sixth embodiment;
FIG. 19 is a cross-sectional view showing a condition in which a fused resin sheet that provides a fuel tank is inflated between a forming die and a pressure forming die;
FIG. 20 is a cross-sectional view showing a condition in which the fused resin sheet that provides the fuel tank is formed with extra-length portions between the forming die and the pressure forming die;
FIG. 21 is a front view showing a first modified example of a caulking portion of a mounted part; and
FIG. 22 is a front view showing a second modified example of a caulking portion of a mounted part.

### DETAILED DESCRIPTION OF EMBODIMENTS

A fuel tank and a method for producing the fuel tank according to a first embodiment of the invention will be described with reference to the drawings.

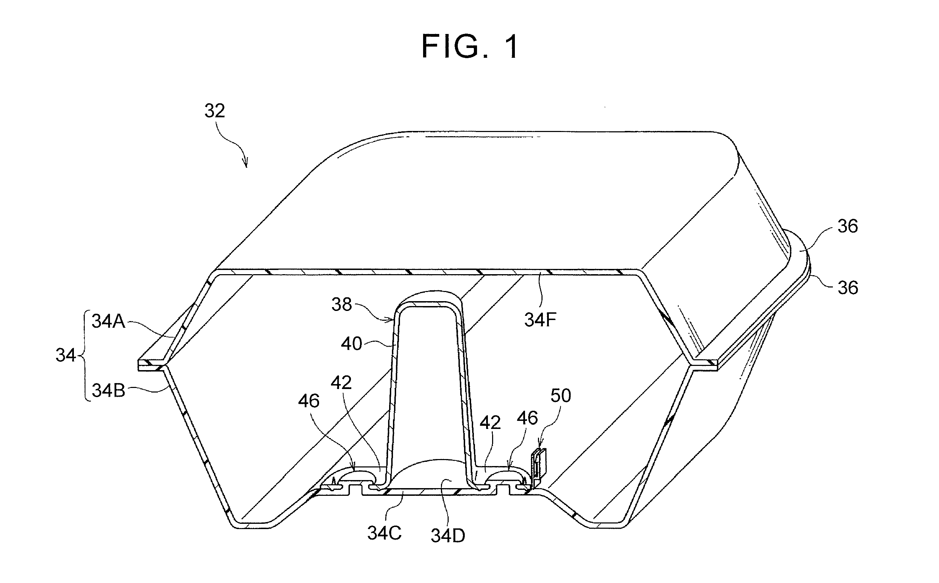

As shown in FIG. 1, the fuel tank 32 has a box-shaped fuel tank body 34 in which fuel can be stored.

The fuel tank body 34 is formed of resin (in this embodiment, thermoplastic resin). More specifically, the fuel tank body 34 includes a resin layer, and a barrier layer having lower fuel permeability than the resin layer (i.e., fuel is less likely to permeate the barrier layer). For example, high-density polyethylene (HDPE) may be used as the resin that forms the resin layer, and ethylene vinyl alcohol (EVOH) may be used as a material that forms the barrier layer.

The fuel tank body 34, which is divided into two sections (upper and lower sections in FIG. 1), has a tank component 34A and a tank component 34B. The tank component 34A is convex upward in FIG. 1, and the tank component 34B is convex downward in FIG. 1. Flanges 36 are formed at outer peripheral portions of these two tank components 34A, 34B. With the flanges 36 joined to each other, the tank components 34A, 34B constitute the box-shaped fuel tank body 34.

A reinforcement 38 is fixed within the fuel tank body 34. The reinforcement 38 is one example of a mounted part. In the example shown in FIG. 1, the reinforcement 38 is fixed to a bottom wall 34C of the fuel tank body 34. The reinforcement 38 of this embodiment has a generally cylindrical main body portion 40. When an upper wall 34F of the fuel tank body 34 comes close to the bottom wall 34C, due to reduction of the internal pressure of the fuel tank body 34, for example, the upper wall 34F is brought into contact with the main body portion 40, so that excessive deformation of the fuel tank body 34 is curbed or prevented. Thus, the reinforcement 38 is a member for suppressing reduction of the strength of fuel tank body 34.

The specific structure of the mounted part is not limited to that of the reinforcement 38 as described above. For example, the mounted part may be selected from a clip for holding a pipe within the fuel tank body 34, fittings for mounting other parts, and so forth. These mounted parts are formed of different types of materials from the thermoplastic resin that forms the fuel tank body 34, and, in particular, formed of materials having higher fusing temperatures than that of the thermoplastic resin that forms the fuel tank body 34. For example, the mounted part may be formed of resin, provided that this condition is satisfied. Further, the mounted part may be made of metal.

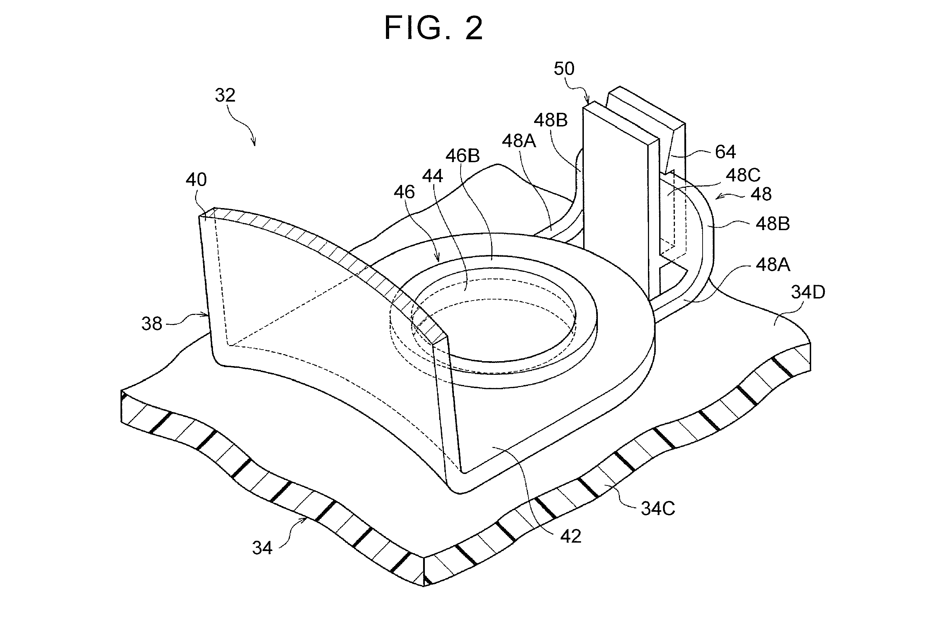

As shown in FIG. 2, the reinforcement 38 is formed with one or more fastened seats 42. Each of the fastened seats 42 extends continuously from the main body portion 40, and its distal end portion is formed like a semicircular plate. In a condition where the reinforcement 38 is fixed within the fuel tank body 34, the fastened seat 42 is in parallel with the bottom wall 34C of the fuel tank body 34.

In the middle of the fastened seat 42, a mounting hole 44 is formed through the fastened seat 42 in its thickness direction.

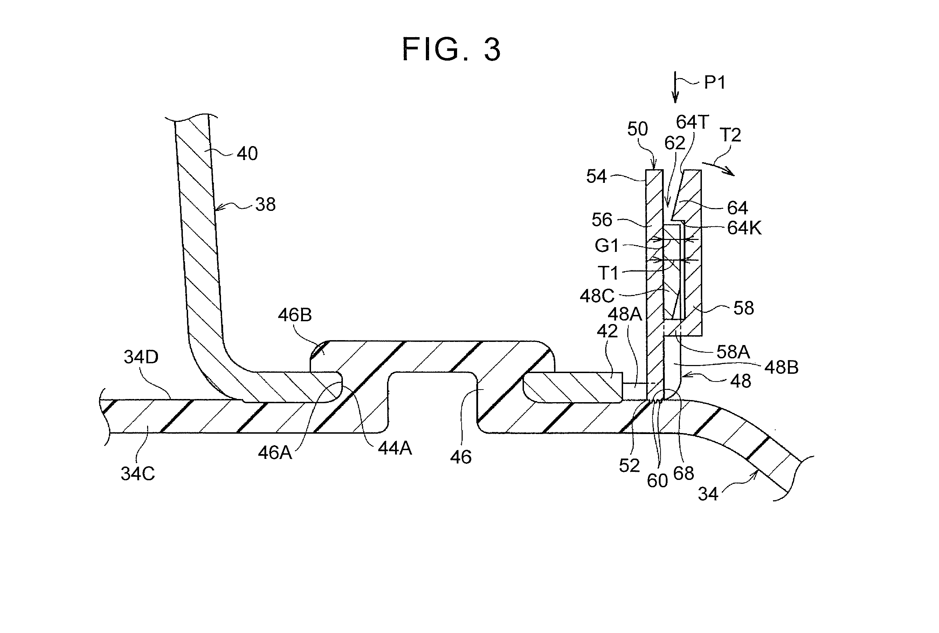

As also shown in FIG. 3, the bottom wall 34C of the fuel tank body 34 is formed with a caulking portion 46 that protrudes toward the inside of the fuel tank body 34. The caulking portion 46 is located inside the mounting hole 44. An outer circumferential surface 46A of the caulking portion 46 adheres to a hole wall surface 44A of the mounting hole 44. The caulking portion 46 is one example of a fixing portion.

The caulking portion 46 has, at its top side, an extended piece 46B that extends radially outwards (radially outwardly of the caulking portion 46). The extended piece 46B is formed in the shape of a disc having a larger diameter than the inside diameter of the mounting hole 44, and cooperates with the bottom wall 34C of the fuel tank body 34 to sandwich the fastened seat 42 between them. In this manner, the fastened seat 42 is sandwiched and fixed (fastened) between the bottom wall 34C of the fuel tank body 34 and the extended piece 46B. In other words, the fastened seat 42 is caulked by means of the bottom wall 34C and the extended piece 46B.

As shown in FIG. 2, the reinforcement 38 is formed with an engaged portion 48. In this embodiment, the engaged portion 48 has a pair of protruding portions 48A that protrude laterally in FIG. 2 from the fastened seat 42, and a pair of erected portions 48B that extend upward from protruding ends of the protruding portions 48A. Further, the pair of erected portions 48B are connected by a connecting portion 48C. Thus, the engaged portion 48 as a whole and the fastened seat 42 are formed in the shape of a closed curve or a loop.

A support member 50 is coupled to the engaged portion 48. The support member 50 is attached at one end portion 52 to the bottom wall 34C of the fuel tank body 34, and supports the reinforcement 38 at the other end portion 54. In the first embodiment, the support member 50 formed separately from the reinforcement 38 is coupled to the reinforcement 38, and the support member 50 protrudes from the reinforcement 38.

The support member 50 has a support plate body 56 in the form of a flat plate, and an opposed plate 58 in the form of a flat plate opposed to the support plate body 56.

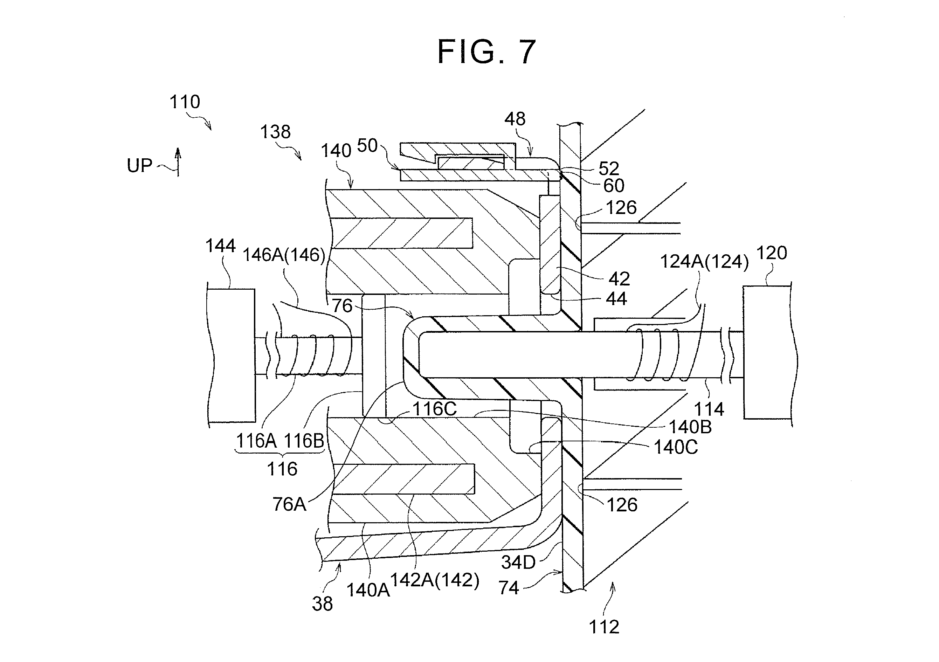

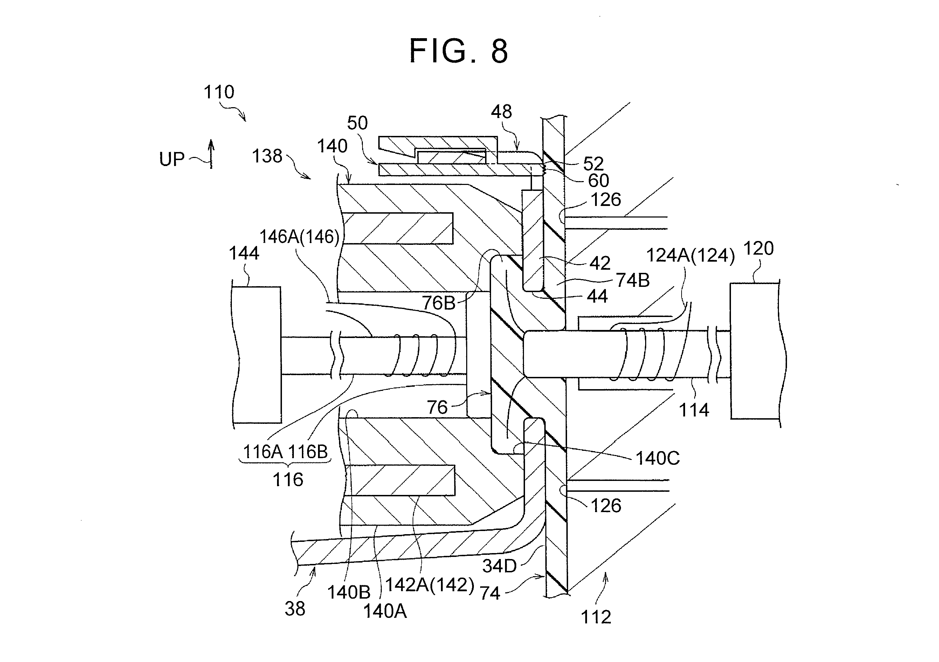

The support member 50 of this embodiment is formed of the same type of material (material that is brought into a fused state at substantially the same temperature) as the fuel tank body 34. As shown in FIG. 7 and FIG. 8, at the time of production of the fuel tank 32, the above-indicated one end portion 52 of the support member 50 is embedded in and welded to the bottom wall 34C of the fuel tank body 34. A plurality of protrusions 60 are formed on the one end portion 52 of the support member 50. In a condition where the one end portion 52 of the support member 50 is embedded in the fuel tank body 34 (a fused resin sheet 74 which will be described later), recesses 68 in which the protrusions 60 are fitted are formed in the fuel tank body 34. With the protrusions 60 thus being in contact with the recesses 68, a fusion-bonded area between the support member 50 and the bottom wall 34C of the fuel tank body 34 is increased.

The opposed plate 58 is joined at its continuous portion 58A closer to the one end portion 52, to the support plate body 56, and is kept in parallel with the support plate body 56. A receiving portion 62 having a slightly wider gap G1 than the thickness T1 of the engaged portion 48 is provided between the opposed plate 58 and the support plate body 56. A claw piece 64 is formed on a portion of the opposite plate 58 closer to the other end portion 54 so as to face the support plate body 56. The claw piece 64 has an engagement surface 64K on one side closer to the one end portion 52, and a tapered surface 64T on the other side closer to the other end portion 54.

In a condition before the support member 50 is welded to the bottom wall 34C of the fuel tank body 34, the connecting portion 48C of the engaged portion 48 is pressed against the tapered surface 64T of the claw piece 64, and is pushed in a direction of arrow P1, so that the opposed plate 58 can be deflected so as to expand the receiving portion 62 (see arrow T2). Then, the engaged portion 48 is pushed into the receiving portion 62. When the erected portions 48B reach a given position as shown in FIG. 3, the opposed plate 58 elastically restores its original shape, and is brought back into parallel with the support plate body 56, so that the connecting portion 48C is received in the gap G1. In this condition, even if an attempt to pull out the engaged portion 48 in a direction opposite to the direction of arrow P1 is made, the connecting portion 48C hits against the engagement surface 64K of the claw piece 64, and therefore, the engaged portion 48 cannot be pulled out. In this manner, the reinforcement 38 and the support member 50 are coupled to each other.

As is understood from the above explanation, the engaged portion 48 and the claw piece 64 (engaging portion) constitute one example of a coupling member for coupling the support member 50 with the reinforcement 38.

Next, a molding device 110 for forming or shaping the fuel tank body 34 of the fuel tank 32 of this embodiment will be described.

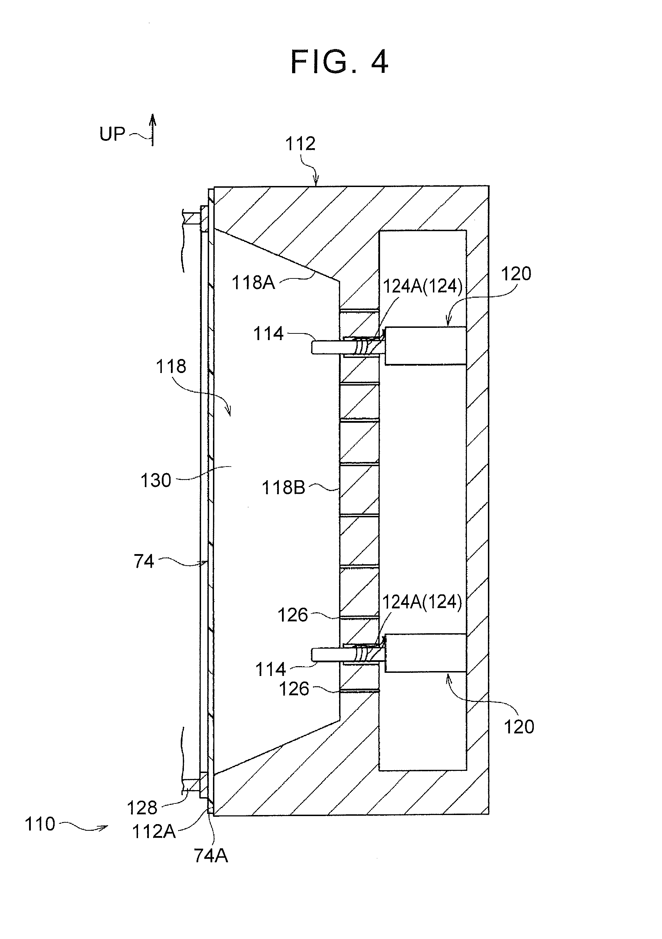

As shown in FIG. 4, FIG. 7 and FIG. 10, the molding device 110 has a forming die 112, movable members 114, and pressure members 116. In FIG. 4 - FIG. 9, arrow UP indicates the upper side at the time when the fuel tank body 34 is formed using the molding device 110. As is understood from FIG. 7 - FIG. 9, a mounting surface 34D on which the reinforcement 38 is mounted extends in a vertical direction when the fuel tank body 34 is formed.

As shown in FIG. 4, the forming die 112 is a metal mold for forming fused resin in the form of a sheet (which will be called "fused resin sheet 74") into the fuel tank body 34. The forming die 112 has a cavity 118 that conforms to the shape of the fuel tank body 34. The fused resin sheet 74 is extruded from the upper side in FIG. 4 into the cavity 118, using an extruder (not shown), or the like. Since the fused resin sheet 74 is extruded from the upper side to the lower side in this manner, the fused resin sheet 74 (that is fused and thus softened) is less likely or unlikely to be curved by gravity. Namely, the fused resin sheet 74 is fed into the cavity 118 while being kept in a flat shape; therefore, the fused resin sheet 74 is less likely or unlikely to be curved and carelessly attached to the inner surface (cavity surface 118A) of the forming die 112.

The movable members 114 are located within the forming die 112. The movable members 114 can be moved by actuators 120 that are similarly located within the forming die 112.

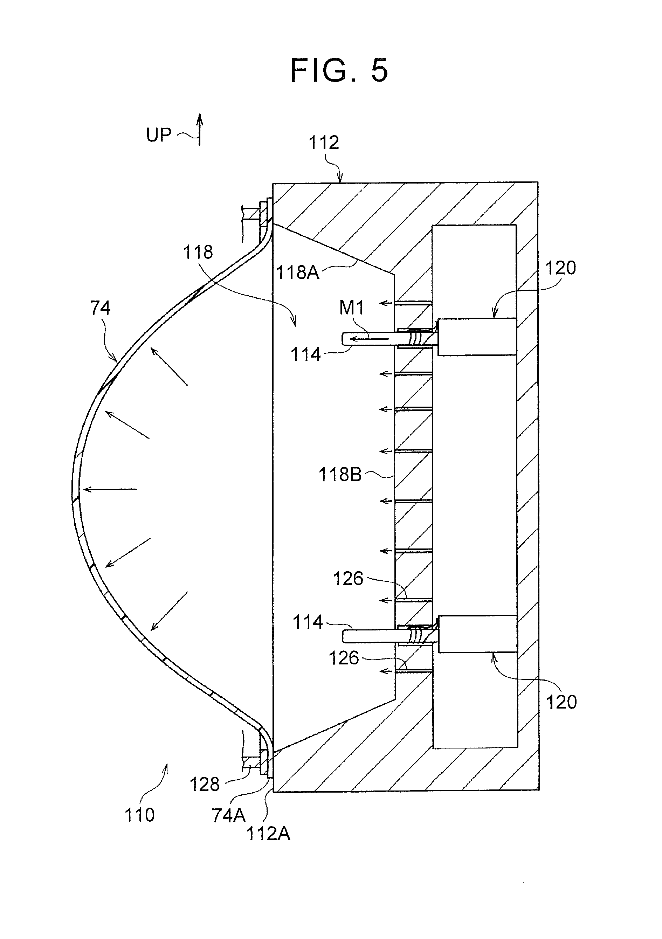

Each of the movable members 114 is a generally columnar metal rod, and is adapted to be moved by the corresponding actuator 120 in directions (direction of arrow M1 indicated in FIG. 5 and its opposite direction) perpendicular to a bottom portion 118B of the cavity surface 118A. In other words, the actuator 120 is operable to move the movable member 114 so that the movable member 114 protrudes from the cavity surface 118A, and is received in the forming die 112.

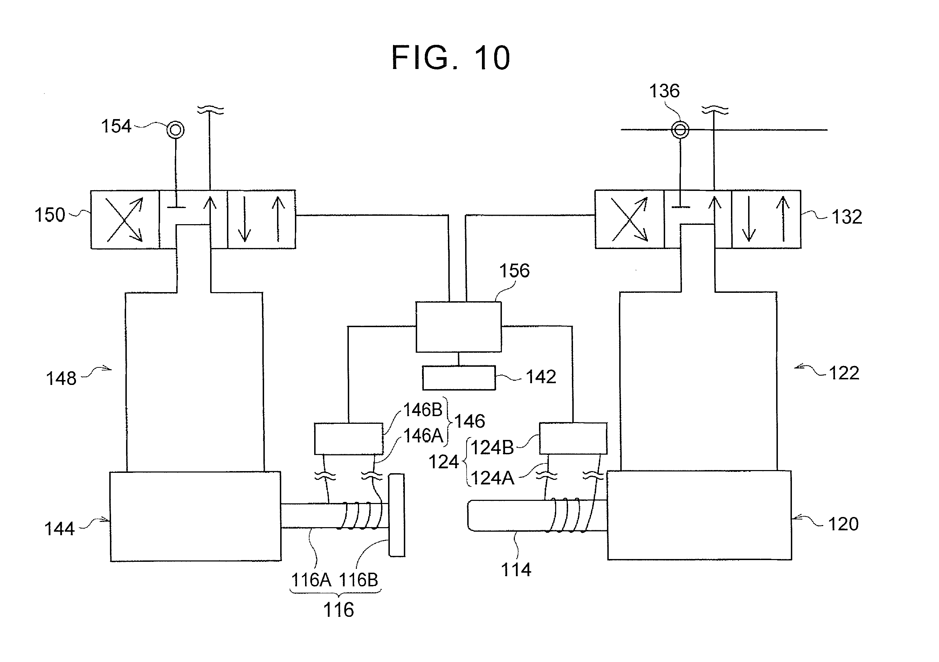

In this embodiment, a double-acting air cylinder is used as one example of the actuator 120. An operation circuit 122 (see FIG. 10) for operating the actuator 120 will be described later.

In this embodiment, the movable member 114 is connected to a reciprocating portion of the air cylinder. While the air cylinder is used as the actuator 120 in this embodiment, a hydraulic cylinder or a servomotor, for example, may be used in place of the air cylinder. When the servomotor is used, the height of protrusion of the movable member 114 from the bottom portion 118B of the cavity surface 118A, and the moving velocity of the movable member 114 can be controlled with improved accuracy.

The movable member 114 is heated by a heater 124. The heater 124 of this embodiment has an electrical heating wire 124A that is wound on the outer periphery of the movable member 114, and a power supply 124B (see FIG. 10). Instead of winding the heating wire 124A on the outer periphery of the movable member 114, a rod-like electrical heating member (formed of an electrical heating material) may be embedded in the inside of the movable member 114.

As shown in FIG. 4, the forming die 112 is provided with gas channels 126. The gas channels 126 extend through the forming die 112, and are open to the cavity surface 118A. The gas channels 126 are connected to a pneumatic circuit (not shown).

The pneumatic circuit is connected to a pressurized gas production device (not shown) and a negative pressure production device (not shown), and pressurized gas can be supplied into the cavity 118 through the gas channels 126, or gas can be drawn from the cavity 118 through the gas channels 126. In this embodiment, a positive pressure pump is used as one example of the pressurized gas production device, and a negative pressure pump is used as one example of the negative pressure production device.

The molding device 110 has a pressing machine 128. The pressing machine 128 is provided at a peripheral portion 112A of the cavity surface 118A of the forming die 112. The pressing machine 128 presses an outer peripheral portion 74A of the fused resin sheet 74 introduced into the forming die 112, against the peripheral portion 112A of the forming die 112. As a result, space between the fused resin sheet 74 and the cavity surface 118A is brought into a hermetically sealed state. Namely, an enclosed space 130 is formed between the fused resin sheet 74 and the cavity surface 118A. The above-described pneumatic circuit may be used for supplying pressurized gas (in this embodiment, pressurized air) into the enclosed space 130 so as to increase the pressure in the enclosed space 130. The pneumatic circuit may also be used for drawing gas from within the enclosed space 130 so as to reduce the pressure in the enclosed space 130.

As shown in FIG. 10, a solenoid valve 132 is provided in the operation circuit 122 of the actuator 120. By switching the solenoid valve 132, the actuator 120 can push out or pull back the movable member 114, or place the movable member 114 in a neutral state. Also, an air supply source (compressor) 136 is connected to the operation circuit 122. A throttle valve may be provided in a return-side circuit for returning the movable member 114.

As shown in FIG. 7, the molding device 110 has a processing device 138 opposed to the forming die 112. The processing device 138 can move in a direction perpendicular to the bottom portion 118B of the cavity surface 118A, and can retract in a direction away from the forming die 112.

The processing device 138 includes a cylindrical die 140. A fused resin projection 76 which will be described later is received in the interior of the cylindrical die 140. The fused resin projection 76 is pressed so as to be formed into the same shape as that of the inner surface of the cylindrical die 140.

An electrical heating member 142A for heating the cylindrical die 140 is incorporated in a circumferential wall 140A of the cylindrical die 140. The electrical heating member 142A is connected to a power supply (not shown), and provides a heater 142. A distal end portion of the cylindrical die 140 presses the fused resin projection 76 (a portion that will surround the mounting hole 44 of the fastened seat 42) toward the forming die 112.

A pressure member 116 is located within the cylindrical die 140. The pressure member 116 has a generally columnar metal rod 116A, and a disc portion 116B made of metal and provided at a distal end portion of the metal rod 116A. An outer circumferential surface 116C of the disc portion 116B is in contact with an inner circumferential surface 140B of the cylindrical die 140.

The pressure member 116 is moved by an actuator 144 along an axial direction of the cylindrical die 140. The cylindrical die 140 is installed in the processing device 138 such that its axial direction is the same as the direction of movement of the movable member 114.

In this embodiment, a double-acting air cylinder is used as one example of the actuator 144. An operation circuit 148 (see FIG. 10) for operating the actuator 144 will be described later. In this embodiment, the pressure member 116 is connected to a reciprocating portion of the air cylinder. While the air cylinder is used as the actuator 144 in this embodiment, a hydraulic cylinder or a servomotor, for example, may be used in place of the air cylinder. When the servomotor is used, the position of the pressure member 116 in the cylindrical die 140 can be determined with improved accuracy, and the moving velocity of the pressure member 116 can be controlled with improved accuracy.

The pressure member 116 is heated by a heater 146. The heater 146 of this embodiment has an electrical heating wire 146A that is wound on the outer periphery of the metal rod 116A, and a power supply 146B (see FIG. 10). In operation, heat is transferred from the electrical heating wire 146A to the disc portion 116B via the metal rod 116A. Instead of winding the heating wire 146A on the outer periphery of the pressure member 116, a rod-like electrical heating member (formed of an electrical heating material) may be embedded in the inside of the pressure member 116.

As shown in FIG. 10, a solenoid valve 150 is provided in the operation circuit 148 of the actuator 144. By switching the solenoid valve 150, the actuator 144 can push out or pull back the pressure member 116, or place the pressure member 116 in a neutral state.

A gas supply source (compressor) 154 is connected to the operation circuit 148. The same gas supply source may be connected to the operation circuit 122 and the operation circuit 148. A throttle valve may be provided in a push-side circuit for pushing out the pressure member 116.

At the distal end (facing the forming die 112) of the cylindrical die 140, a forming part 140C is formed by partially denting a distal end face of the cylindrical die 140. The forming part 140C has a circular shape having an inside diameter that is larger than the diameter of the disc portion 116B of the pressure member 116.

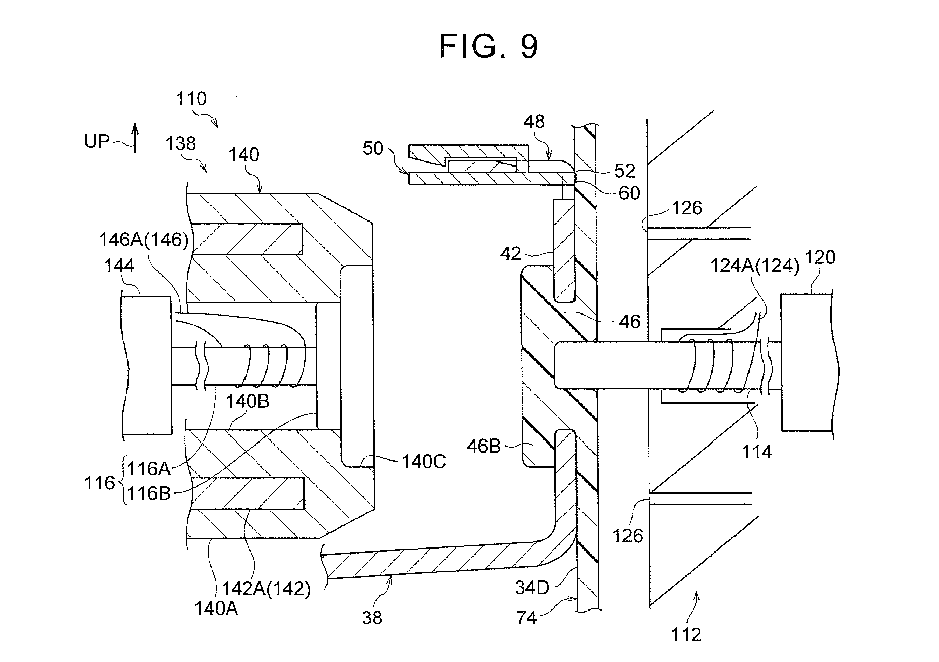

As is understood from FIG. 8 and FIG. 9, when the fused resin projection 76 is pressed by the disc portion 116B of the pressure member 116, the projection 76 intrudes into the forming part 140C, and the intruding portion provides the extended piece 46B (see FIG. 3) of the caulking portion 46. The pressure member 116 is controlled so that the disc portion 116B can move until it reaches the forming part 140C of the cylindrical die 140.

As shown in FIG. 10, the molding device 110 includes a controller 156. The controller 156 controls electrical equipment used in the molding device 110. For example, the controller 156 controls switching of the solenoid valve 132 and the solenoid valve 150, and starting of the heater 124, heater 142, and the heater 146.

In the molding device 110 of this embodiment, the movable members 114 also function as eject pins for detaching the tank component 34B from the forming die 112.

Next, the method for producing the fuel tank 32 of this embodiment will be described.

(Setting Process)

Initially, the fused resin sheet 74 that provides the tank component 34B of the fuel tank 32 is produced, and the fused resin sheet 74 thus produced is introduced into the forming die 112 of the molding device 110. In this embodiment, the fused resin sheet 74 is extruded downward from the upper side in FIG. 4 into the forming die 112. Then, the outer peripheral portion 74A of the fused resin sheet 74 is pressed by the pressing machine 128, against the peripheral portion 112A of the forming die 112, so that the fused resin sheet 74 is set in the forming die 112. In this condition, the enclosed space 130 is formed between the fused resin sheet 74 and the cavity surface 118A.

(Expansion Process)

Then, gas is supplied from the pneumatic circuit into the enclosed space 130 through the gas channels 126, as shown in FIG. 5. With the gas thus supplied to the enclosed space 130, the pressure in the enclosed space 130 is increased, so that the fused resin sheet 74 is expanded and inflated. In this manner, the thickness of the inflated portion of the fused resin sheet 74 is made uniform. Also, the fused resin sheet 74 has an extra-length portion relative to the cavity surface 118A. The extra-length portion of the fused resin sheet 74 can be changed by controlling the pressure in the enclosed space 130. It is preferable to obtain (provide) the extra-length portion of the fused resin sheet 74, which corresponds to the amount of resin required for the fused resin projections 76 that will be described later.

When the fused resin sheet 74 is expanded, the height of protrusion of the movable members 114 from the bottom portion 118B of the cavity surface 118A is controlled. The protrusion height of the movable members 114 may be controlled at any time provided that it is before the fused resin sheet 74 having the extra-length portion is placed along the cavity surface 118A in a shaping process which will be described later.

(Shaping Process)

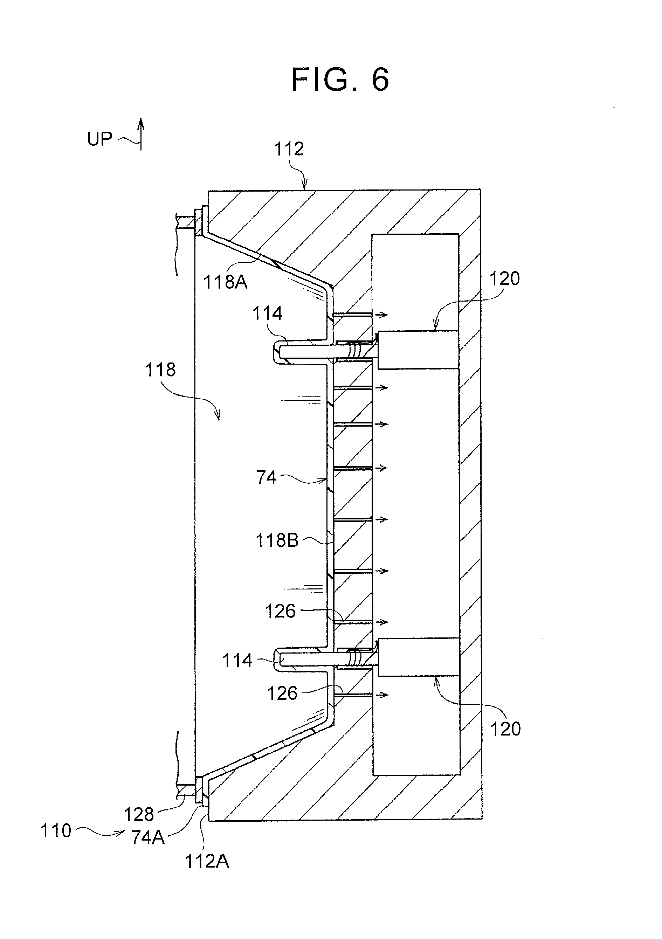

Then, the air is drawn from the enclosed space 130 through the gas channels 126, so that the pressure in the enclosed space 130 is reduced. As a result, the expanded fused resin sheet 74 is attached firmly or tightly to the cavity surface 118A, as shown in FIG. 6. Namely, the expanded fused resin sheet 74 is placed along the cavity surface 118A. At this time, since the movable members 114 protrude from the cavity surface 118A, portions of the expanded fused resin sheet 74 which are brought into abutting contact with the movable members 114 protrude in the thickness direction, and form the fused resin projections 76.

### (Placement Process)

Then, as shown in FIG. 7, each of the fused resin projections 76 is inserted through the mounting hole 44 formed in the corresponding fastened seat 42 of the reinforcement 38, so that the fastened seat 42 is placed on the expanded fused resin sheet 74.

At this time, the support member 50 is coupled to the reinforcement 38. When the fastened seat 42 is placed on the fused resin sheet 74, the above-indicated one end portion 52 of the support member 50 also comes into contact with the fused resin sheet 74. Since the fused resin sheet 74 is in a fused state, the one end portion 52 of the support member 50 is embedded in the fused resin sheet 74, and the support member 50 is welded to the fused resin sheet 74. In particular, since the protrusions 60 are formed on the one end portion 52 of the support member 50 of this embodiment, the area of contact of the one end portion 52 with the fused resin sheet 74 is relatively large, as compared with the structure in which such protrusions are not formed; therefore, the support member 50 can be firmly welded to the fused resin sheet 74.

With the support member 50 thus attached by welding to the fused resin sheet 74, the reinforcement 38 is supported by the support member 50.

### (Working Process)

Then, the movable member 114 is moved in a direction opposite to the direction in which the fused resin projection 76 protrudes. Subsequently, the fused resin projection 76 is pressed and deformed by the pressure member 116 in the direction opposite to the protruding direction, from its top side. More specifically, in this embodiment, the solenoid valve 132 is switched so as to pull back the movable member 114, and then, the solenoid valve 150 is switched so as to push out the pressure member 116 to press the fused resin projection 76. The method of deforming the fused resin projection 76 from the top side is not limited to the above-described method. For example, the fused resin projection 76 may be pressed by the pressure member 116 in the direction opposite to the protruding direction of the fused resin projection 76 while the movable member 114 is being moved in the direction opposite to the protruding direction.

In the working process, the controller 156 (see FIG. 10) starts the heater 124, heater 142, and the heater 146. The heater 124 may be started in the shaping process and the working process.

As shown in FIG. 8, the fused resin projection 76 pressed by the pressure member 116 is deformed such that its circumferential wall portion 76B is double-folded. Then, the folded portion flows into space between the cylindrical die 140 and the fastened seat 42. In this manner, the extended piece 46B (see FIG. 3) is formed from the folded portion of the fused resin sheet 74, and the fastened seat 42 of the reinforcement 38 is sandwiched between a general portion 74B of the fused resin sheet 74 and the extended piece 46B. The general portion 74B of this embodiment indicates a portion of the expanded fused resin sheet 74 which is in contact with the fastened seat 42.

Thus, in the first embodiment, the caulking portion 46 is formed in the fuel tank body 34 while the reinforcement 38 is supported by the support member 50 against the fuel tank body 34 (fused resin sheet 74). At this time, since the fusing temperature of the material that forms the reinforcement 38 is higher than the fusing temperature of the thermoplastic resin that forms the fuel tank body 34, the reinforcement 38 is less likely or unlikely to be deformed by fusion.

Then, the heater 124, heater 142, and the heater 146 are stopped. In a condition where the fastened seat 42 is sandwiched between the extended piece 46B and the general portion 74B of the fused resin sheet 74, the fused resin is cooled and solidified. In this manner, the caulking portion 46 and the extended piece 46B for mounting the reinforcement 38 on the fuel tank body 34 are formed on the tank component 34B. The reinforcement 38 is fixed (fastened) to the tank component 34B, by means of the caulking portion 46 and the extended piece 46B.

### (Demolding Process)

Then, the cylindrical die 140 is moved away from the tank component 34B, as shown in FIG. 9. Further, the movable member 114 is projected into the cavity 118 in the forming die 112, so that the tank component 34B is released or detached from the forming die 112.

Then, an outer peripheral portion of the tank component 34A formed using a forming die (not shown) and an outer peripheral portion of the tank component 34B are superimposed on and joined (welded) to each other, so that the fuel tank body 34 is completed.

In this embodiment, the reinforcement 38 is supported by the support member 50, throughout the process from the above-described placement process to the demolding process, and to completion of the fuel tank body 34. Accordingly, when the fused resin sheet 74 is in a fused state, deformation of the caulking portion 46 (caulking portion) can be curbed or prevented even if gravity acts on the reinforcement 38. Thus, the reinforcement 38 can be kept at a given mounting position.

Next, the effects of the fuel tank 32 and the method for producing the fuel tank 32 according to this embodiment will be described.

In the method for producing the fuel tank 32 of this embodiment, when the reinforcement 38 is fixed to the tank component 34B, the fused resin sheet 74 is in the fused state, but the reinforcement 38 is supported by the support member 50. Accordingly, the load of the reinforcement 38 acting on the caulking portion 46 is smaller than that of the arrangement that does not include the support member 50. Thus, even when the caulking portion 46 is in the fused state, the caulking portion 46 is less likely or unlikely to be deformed due to the load of the reinforcement 38 acting on this portion 46. In particular, when the fuel tank body 34 is formed by molding, the mounting surface 34D may be oriented in the vertical direction, as shown in FIG. 8, FIG. 9, etc. In this case, the support member 50 supports the reinforcement 38 in a direction along the mounting surface 34D, namely, in the vertical direction, so that deformation of the caulking portion 46 can be effectively curbed.

In the fuel tank 32 of this embodiment, deformation of the caulking portion 46 is curbed; therefore, the reinforcement 38 can be firmly fixed to the fuel tank body 34 at a desired position. Displacement of the reinforcement 38 from its original mounting position can also be curbed. For example, in a condition where the fuel tank 32 is installed on the vehicle, the mounting surface 34D often provides a horizontal surface, and, in this case, force is applied to the reinforcement 38 in the vehicle longitudinal direction and the vehicle width direction. However, since the support member 50 supports the reinforcement 38, the reinforcement 38 is less likely or unlikely to oscillate or be displaced relative to the fuel tank body 34 in the vehicle longitudinal direction and the vehicle width direction.

In the first embodiment, in particular, when the caulking portion 46 is formed, the support member 50 supports the reinforcement 38 at the upper side than the caulking portion 46. Accordingly, a portion of the reinforcement 38 located on the upper side of the caulking portion 46 is less likely or unlikely to rotate (fall) in a direction away from the bottom wall 34C (mounting surface) of the fuel tank body 34, about the caulking portion 46.

The above-indicated one end portion 52 of the support member 50 also contacts with the fused resin sheet 74. Since the one end portion 52 of the support member 50 is embedded in the fused resin sheet 74 while the fused resin sheet 74 is in the fused state, the load of the reinforcement 38 can be surely applied to the fuel tank body 34, as compared with the structure in which the support member 50 is not embedded. Furthermore, since the one end portion 52 of the support member 50 is embedded in the fused resin sheet 74, the support member 50 is less likely or unlikely to be displaced relative to the fused resin sheet 74; therefore, the reinforcement 38 can be supported with high reliability.

In addition, since the support member 50 is welded (attached) to the fused resin sheet 74, the support member 50 is not carelessly separated or detached from the fused resin sheet 74. Thus, a part of the load of the reinforcement 38 can be surely applied to the fused resin sheet 74 (fuel tank body 34) via the support member 50. Since the support member 50 is welded and attached to the fused resin sheet 74, a member, such as fittings or adhesive, for mounting the support member 50 is not needed, and the structure will not be complicated.

In particular, the protrusions 60 are formed on the one end portion 52 of the support member 50 of the first embodiment. Therefore, the contact area of the one end portion 52 with the fused resin sheet 74 is relatively large, as compared with the structure in which the protrusions 60 are not formed, and the one end portion 52 can be firmly welded to the fused resin sheet 74.

In the first embodiment, the support member 50 is a separate or different body from the reinforcement 38 (mounted part). Accordingly, the position and shape of the support member 50 can be determined with a high degree of freedom or flexibility. For example, the position and shape of the support member 50 can be determined so as to avoid various members placed within the fuel tank body 34.

Further, in the first embodiment, the support member 50 and the fuel tank body 34 are separate bodies. Here, a structure in which a support member and a fuel tank body are formed integrally will be considered, for the sake of comparison. If the support member and the fuel tank body are to be formed integrally, the support member is formed by projecting a part of resin that forms the fuel tank body; therefore, the amount of the resin that forms the fuel tank body is reduced in the vicinity of the support member. In particular, in the production method in which the fuel tank body is formed using a fused resin sheet, it is necessary to increase the overall thickness of the fuel tank body, so as to assure a sufficient thickness of the fuel tank body even if the amount of resin is reduced in the vicinity of the support member. With the thickness of the fuel tank body thus increased, the overall weight of the fuel tank body would be increased. On the other hand, in the structure in which the support member 50, as a separate body from the fuel tank body 34, is attached to the fuel tank body 34 by embedding or welding, as in the first embodiment, there is no need to use a part of the resin material that forms the fuel tank body 34 so as to form the support member 50. Therefore, the amount of the resin that forms the fuel tank body 34 is less likely or unlikely to be reduced in the vicinity of the support member 50.

The support member 50 is coupled to the reinforcement 38 (mounted part), by means of the engaged portion 48 and the claw piece 64 as one example of coupling member. Thus, the support member 50 can be coupled to the reinforcement 38, with a simple structure provided with the engaged portion 48 and the claw piece 64. The claw piece 64 engages with the engaged portion 48, and the engaged portion 48 and the fastened seat are formed in the shape of a closed line or loop. Accordingly, the engaged portion 48 is less likely or unlikely to fall off through the gap G1.

In order to curb deformation of the caulking portion 46, it may also be considered to form a portion (support portion) for supporting the reinforcement 38, on the fuel tank body 34, for example. However, in order to form the support portion on the fuel tank body 34, another device (a device for forming the support portion), or the like, needs to be used, when the fuel tank body 34 is formed by molding.

In this embodiment, no device for forming the above-mentioned support portion on the fuel tank body 34 is needed, and the fuel tank 32 can be produced at low cost.

In order to curb deformation of the caulking portion 46, it may be considered to provide a large number of caulking portions 46 for one reinforcement 38, for example. However, if the number of the caulking portions 46 is increased, an increased number of facilities for forming the caulking portions 46 would be needed.

In this embodiment, on the other hand, there is no need to increase the number of the caulking portions 46, and the minimum number of caulking portions 46 needed for mounting the reinforcement 38 on the fuel tank body 34 are only required to be provided. Since the number of the caulking portions 46 needed is small, the fuel tank 32 can be produced at low cost.

In the first embodiment, the support member 50 is formed of the same type of material (material that is brought into a fused state at substantially the same temperature) as the fuel tank body 34. However, the material of the support member 50 may be of a different type from that of the fuel tank body 34. For example, the support member 50 may be formed of resin that is brought into a fused state at a higher temperature than the resin that forms the fuel tank body 34.

Even in the case where the support member 50 and the fuel tank body 34 are formed of different materials, the support member 50 may be attached to the fuel tank body 34, by embedding one end portion 52 of the support member 50 in the fused resin sheet 74, for example. In particular, if a plurality of protrusions 60 (protruding portions) similar to those shown in FIG. 2 are formed on the one end portion 52 of the support member 50, the area of contact between the support member 50 and the fuel tank body 34 is increased, so that the support member 50 can be more firmly secured to the fuel tank body 34.

In this connection, a plurality of recesses may be formed in one end portion of the support member 50, and protrusions to be fitted in the recesses while the fused resin sheet 74 is in the fused state may be formed on the fuel tank body 34.

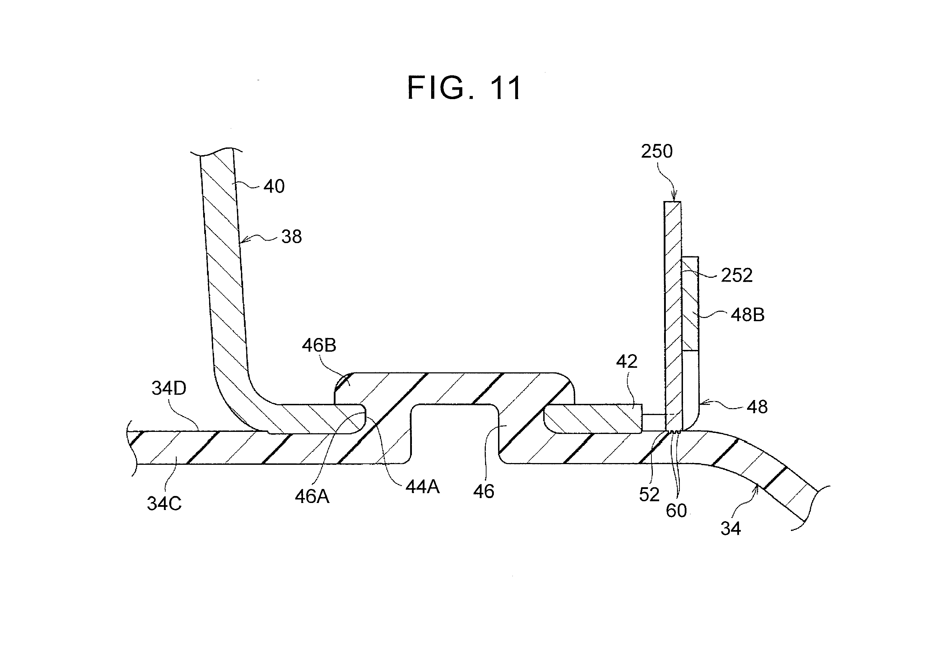

While the support member 50 is coupled to (engaged with) and attached to the reinforcement 38 in the above-described first embodiment, a support member, such as a support member 250 of a second embodiment shown in FIG. 11, may be formed integrally with the reinforcement 38 by welding, or the like. For example, if at least a portion of the support member 250 which is welded to the reinforcement 38 is formed of the same material (resin having substantially the same fusing point) as the reinforcement 38, the reinforcement 38 and the support member 250 can be welded to each other at a contact surface 252. Since the reinforcement 38 and the support member 250 are welded to each other, the opposed plate 58 and the claw piece 64 as shown in FIG. 3 are not needed, and the structure of the support member 250 can be simplified.

In the second embodiment, when the whole of the support member 250 is formed of the same material (resin having substantially the same fusing point) as the reinforcement 38, the material of the support member 250 is different from that of the fuel tank body 34. In this case, the support member 250 may be embedded in and attached to the fuel tank body 34. On the other hand, the support member 250 may be formed of two different materials, such that a portion of the support member 250 welded to the reinforcement 38 is formed of the same material as the reinforcement 38, and a portion of the support member 250 which contacts with the fuel tank body 34 is formed of the same material as the fuel tank body 34. In this case, the support member 250 can be welded to both the reinforcement 38 and the fuel tank body 34.

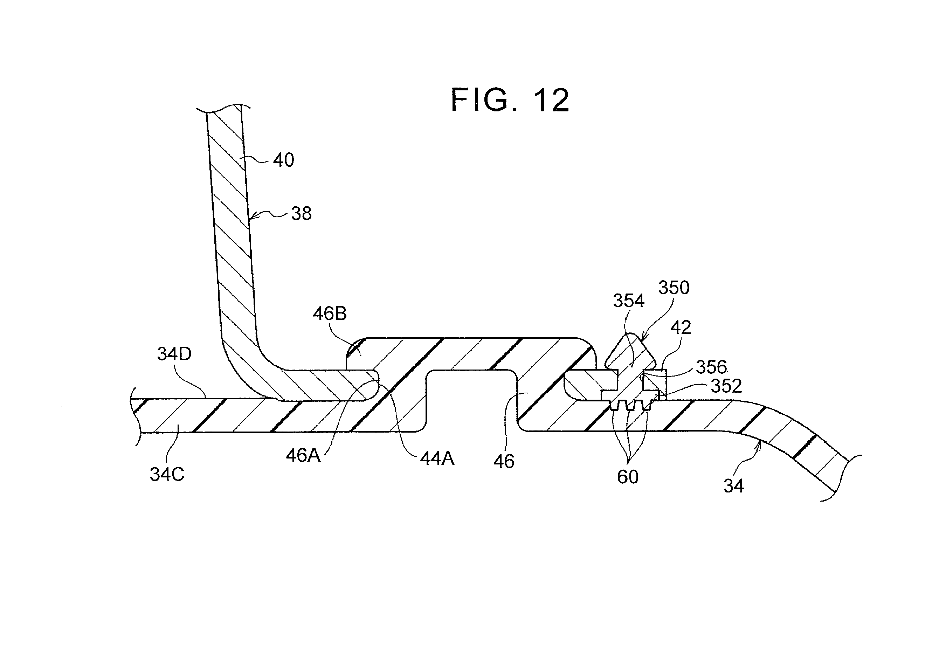

Further, when the same type of resin material as that of the fuel tank body 34 is used for a support member, a support member 350 of a third embodiment shown in FIG. 12 can be used as the support member. The support member 350 has a plate-like weld seat 352 that is welded to the bottom wall 34C of the fuel tank body 34, and an engaging pin 354 that protrudes from the weld seat 352.

In the third embodiment, an engaging hole 356 is formed in the fastened seat 42 of the reinforcement 38. In a condition where the engaging pin 354 is inserted in the engaging hole 356, the weld seat 352 is welded to the fused resin sheet 74 of the tank component 34B. In this manner, a load of the reinforcement 38 is applied to the fuel tank body 34 via the support member 350, so that the reinforcement 38 can be supported. Thus, a structure for supporting the reinforcement 38 can be realized by a simple structure in which the engaging pin 354 is inserted in and engaged with the engaging hole 356 of the fastened seat 42.

In the second embodiment and the third embodiment, the overall configuration of the fuel tank is similar to that of the first embodiment, and therefore, is not illustrated in the drawings. Also, a method for producing the fuel tank of the second embodiment and a method for producing the fuel tank of the third embodiment are similar to the method for producing the fuel tank of the first embodiment, and therefore, are not illustrated in the drawings.

In the first through third embodiments, the support member is attached to the fuel tank body 34, so that a part of the load of the reinforcement 38 can be applied to the fuel tank body 34 via the support member. Namely, a part of the load of the reinforcement 38 can be distributed to and supported by the caulking portion 46 and the support member 50. Accordingly, even in a condition where the caulking portion 46 of the fused resin sheet 74 is in a fused state, the load of the reinforcement 38 applied to the caulking portion 46 is reduced, and deformation of the caulking portion 46 can be curbed.

Next, a fuel tank of a fourth embodiment and a method for producing the fuel tank will be described with reference to the drawings. In the fourth embodiment and following fifth and sixth embodiments, the same reference numerals are assigned to the same or similar elements, members, etc. as those of the first embodiment, and these elements or members will not be described in detail.

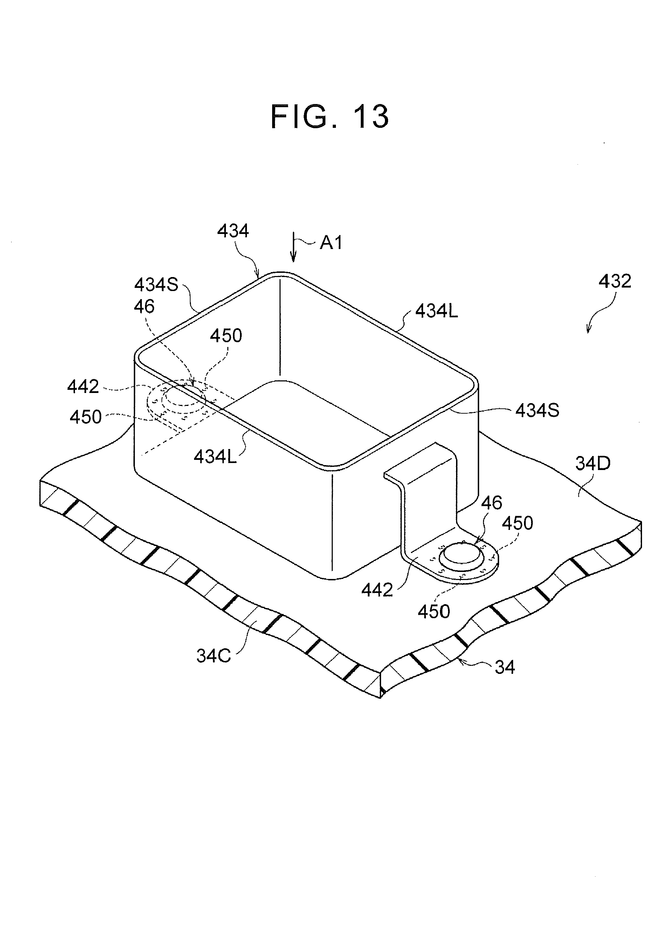

As shown in FIG. 13, in a fuel tank 432 of the fourth embodiment, a sub-tank 434 is incorporated in the fuel tank body 34 (see FIG. 1). Namely, in the fourth embodiment, the sub-tank 434 is one example of the mounted part.

In the example shown in FIG. 13, the sub-tank 434 is formed in the shape of a generally cuboid box that is open at one side. The sub-tank 434 is placed on the fuel tank body 34 such that a surface of the sub-tank 434 which is opposite to the open side is in contact with or opposed to the bottom wall 34C of the fuel tank body 34. A part of fuel in the fuel tank body 34 can be stored in the sub-tank 434.

The shape of the sub-tank 434 as seen in a planar view (in a direction of arrow A1 in FIG. 13) may be square, but it is rectangular in the example of FIG. 13, and has long sides 434L and short sides 434S. The sub-tank may also be in the shape of a circle or an ellipse, or a polygon other than the rectangle, as seen in the planar view.

The sub-tank 434 has one or more fastened seats 442 that are extended outward in the planar view. In the example shown in FIG. 13, two fastened seats 442 are formed, namely, one fastened seat 442 extends from the middle of each of the short sides 434S as seen in the planar view.

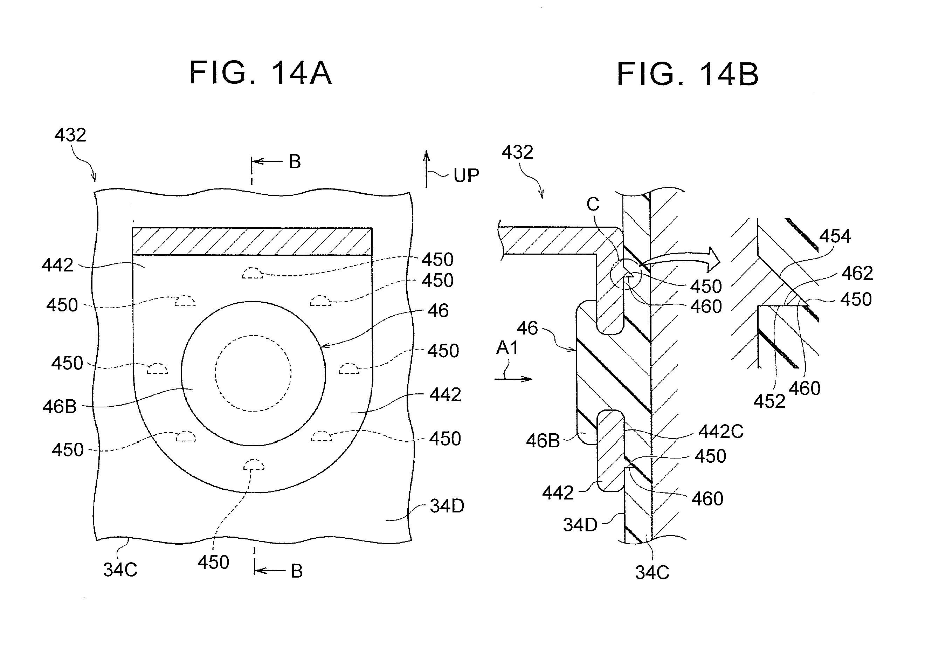

As shown in FIG. 14A and FIG. 14B, one or more support convex portions 450 are formed on an opposed surface 442C of the fastened seat 442 which is opposed to the bottom wall 34C of the fuel tank body 34. In the example of FIG. 14A, eight support convex portions 450 are formed around the mounting hole 44, as viewed from the front of the fastened seat 442 (as viewed in the direction of arrow A1).

As shown in FIG. 14A, each of the support convex portions 450 has a semicircular shape having an arc-like upper portion, as viewed in the direction of arrow A1. Also, in a cross-section as shown in FIG. 14B, each of the support convex portions 450 has a supported surface 452 that is formed at the lower side and is perpendicular to the opposed surface 442C, and an inclined surface 454 that is formed at the upper side and is inclined relative to the opposed surface 442C. The supported surface 452 assumes a horizontal plane during production of the fuel tank 32.

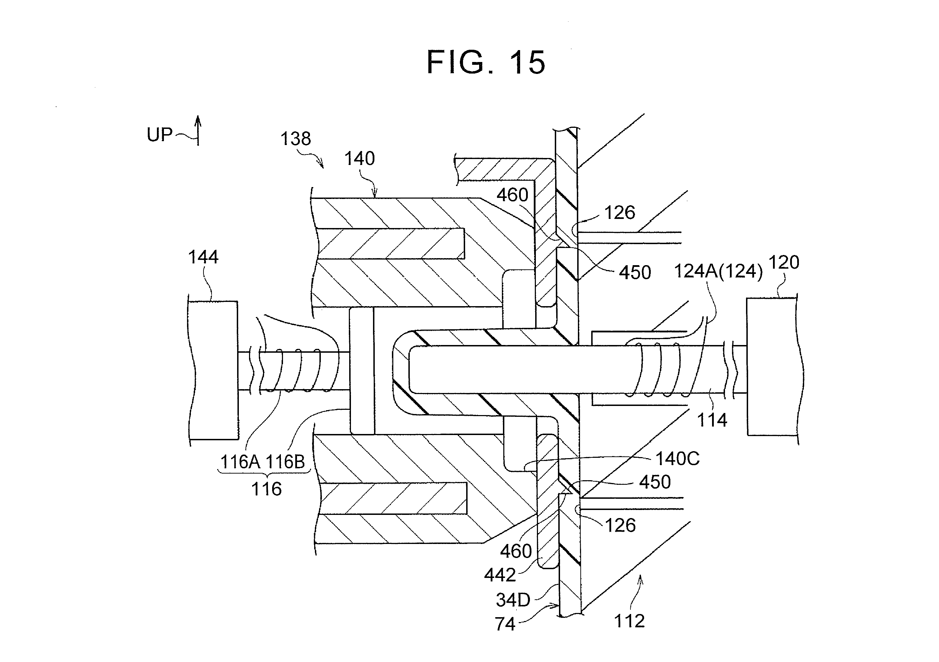

The fuel tank 432 of the fourth embodiment can be produced by substantially the same production method as the fuel tank 32 of the first embodiment. In the fourth embodiment, in particular, each of the fastened seats 442 is placed on the fused resin sheet 74 expanded in the forming die 112, and the fastened seat 442 is pushed into the fused resin sheet 74, so that each of the support convex portions 450 penetrates into the fused resin sheet 74 that is in the fused state, as shown in FIG. 15. Then, support concave portions 460 each having a shape corresponding to that of the support convex portion 450 are formed in the fused resin sheet 74. In particular, support surfaces 462 that are opposed to the supported surfaces 452 and support the supported surfaces 452 are formed in the fused resin sheet 74. In this condition (during production of the fuel tank 32), the supported surface 452 assumes a horizontal plane, and therefore, the support surface 462 corresponding to the supported surface 452 also assumes a horizontal plane. While "horizontal" mentioned herein includes a completely horizontal condition, the support surfaces 462 may be inclined to such an extent that they can support a load of a mounted part (while preventing it from slipping or falling off by gravity), during forming of the fuel tank body.

Accordingly, in the fourth embodiment, the support convex portions 440 are supported by the support surfaces 462, thereby to be attached to the fuel tank body.

Thus, in the fourth embodiment, the support convex portions 450 are formed on the sub-tank 434 as one example of mounted part, so that the support concave portions 460 can be formed on the fuel tank body 34 side (in the fused resin sheet 74), and the sub-tank 434 can be supported, during production of the fuel tank. Since the load of the sub-tank 434 applied to the caulking portions 46 is small, deformation of the caulking portions 46 can be curbed even when the caulking portions 46 are in the fused state. Then, the sub-tank 434 can be firmly fixed to the fuel tank body 34, and displacement of the sub-tank 434 can be curbed.

Furthermore, there is no need to form a support portion(s) on the fuel tank body 34, or increase the number of the caulking portions 46, so as to curb deformation of the caulking portions 46; therefore, the fuel tank 32 can be produced at low cost. To provide the support member, the support convex portions 450 (supported surfaces 452) are only required to be formed on the sub-tank 434, resulting in a simple structure.

Since the support convex portions 450 are integral with the sub-tank 434, sound or noise is less likely or unlikely to be generated due to contact between the support convex portions 450 and the sub-tank 434, as compared with a structure in which the support convex portions 450 and the sub-tank 434 are separate bodies.

The support convex portions 450 surround the caulking portion 46 when viewed from the front of the fastened seat 442. Therefore, deformation of the caulking portion 46 can be more effectively curbed, as compared with the arrangement in which the support convex portions 450 are unevenly located around the caulking portion 46.

Next, a fuel tank of a fifth embodiment will be described. In the fifth embodiment, the same reference numerals are assigned to the same or similar elements, members, etc., as those of the fourth embodiment, and these elements or members will not be described in detail.

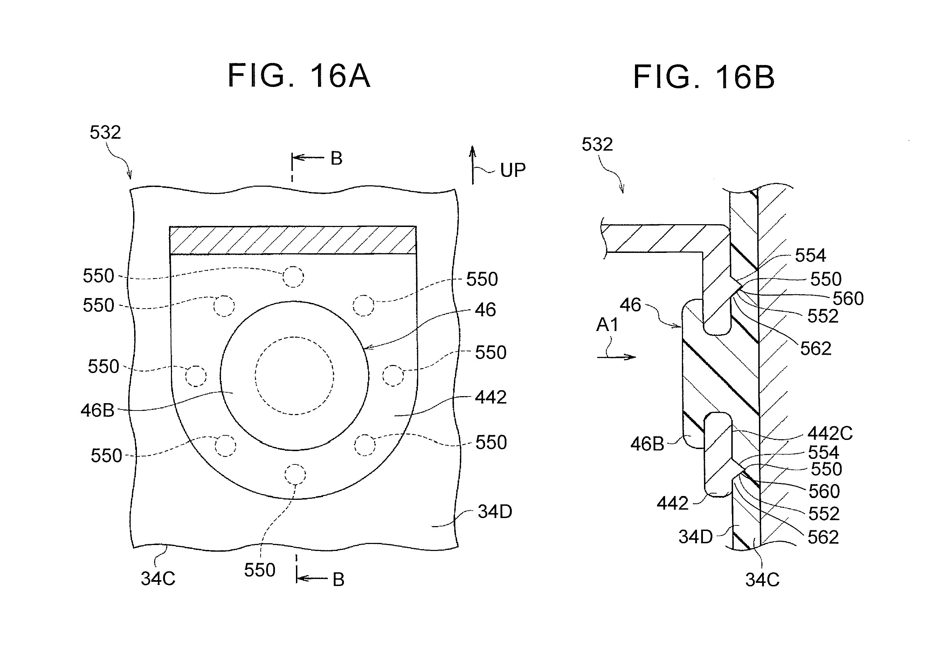

In the fuel tank 532 of the fifth embodiment, support convex portions 550 are formed on the sub-tank 434, in place of the support convex portions 450 of the fourth embodiment. Each of the support convex portions 550 is formed in a generally conical shape, and has a circular shape when viewed in the direction of arrow A1, as shown in FIG. 16A. In a cross-section as shown in FIG. 16B, the support convex portion 550 has a supported surface 552 that is formed at the lower side and is inclined relative to the opposed surface 442C, and an inclined surface 554 that is formed at the upper side and is inclined relative to the opposed surface 442C.

The fuel tank 532 of the fifth embodiment can also be produced by substantially the same method as the fuel tank 432 of the fourth embodiment. In particular, during production of the fuel tank, support concave portions 560 are formed on the fuel tank body 34 side (in the fused resin sheet 74). Since the sub-tank 434 can be supported by support surfaces 562 of the support concave portions 560, deformation of the caulking portion 46 can be curbed even when the caulking portion 46 is in the fused state. Thus, the sub-tank 434 can be firmly fixed to the fuel tank body 34, and displacement of the sub-tank 43 can be curbed.

In the fifth embodiment, the support convex portions 550 are supported by the support surfaces 562, thereby to be attached to the fuel tank body.

Furthermore, there is no need to form a support portion(s) on the fuel tank body 34, or increase the number of the caulking portions 46, so as to curb deformation of the caulking portions 46; therefore, the fuel tank 32 can be produced at low cost. The shape of each support convex portion 550 is not limited to the conical shape as described above, but may be pyramidal, columnar, or prismatic.

Next, a fuel tank of a sixth embodiment will be described.

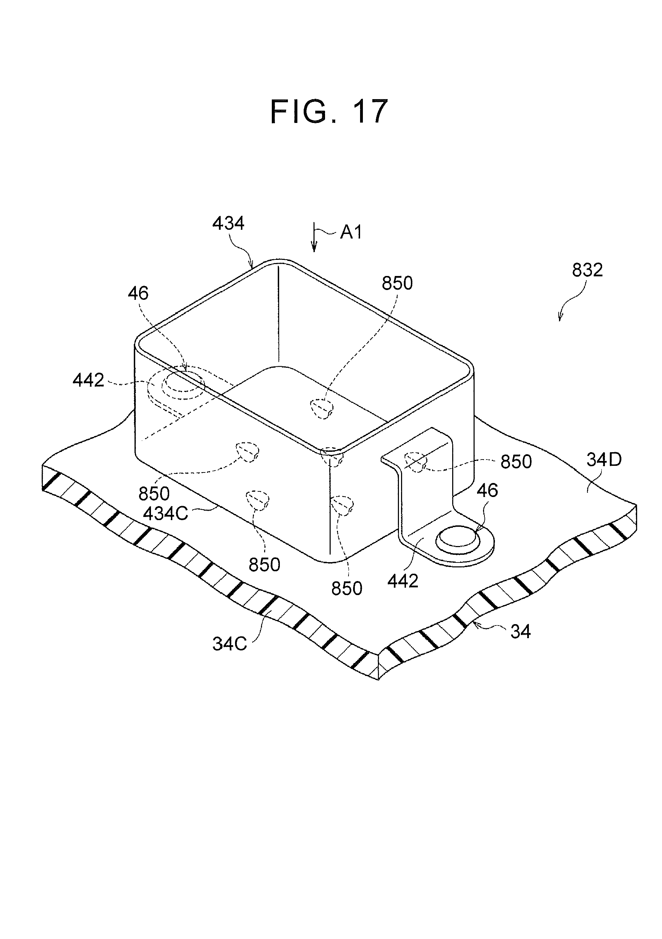

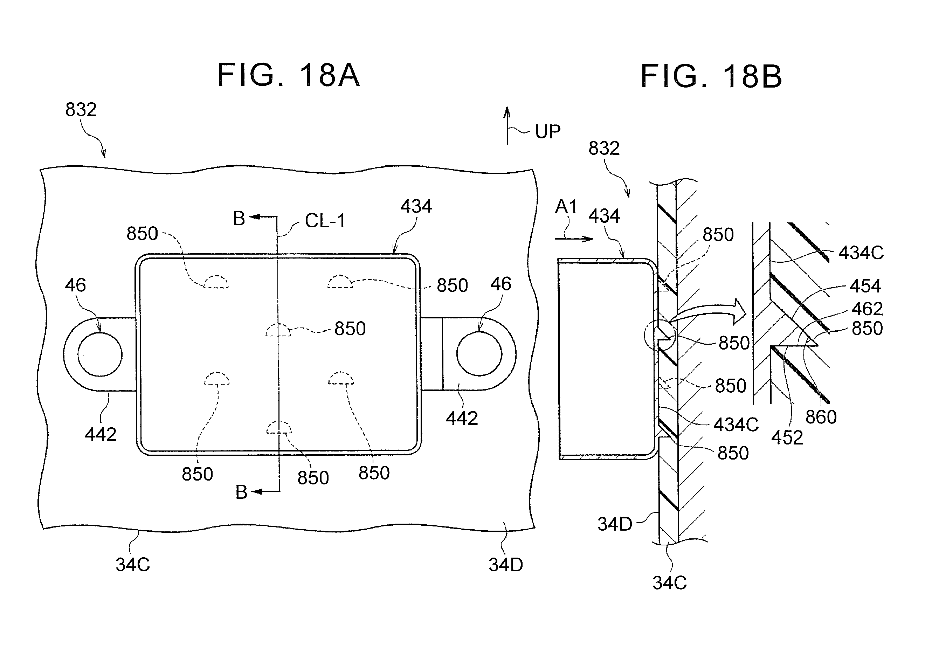

In the fuel tank 832 of the sixth embodiment, one or more support convex portions 850 are formed on an opposed surface 434C of the sub-tank 434 which is opposed to the bottom wall 34C of the fuel tank body 34, as shown in FIG. 17. In the example shown in FIG. 18A, six support convex portions 850 are formed symmetrically in position and shape with respect to a center line CL-1 that extends in the vertical direction.

Each of the support convex portions 850 has a semicircular shape having an arc-like upper portion, as viewed in the direction of arrow A1. In cross-sections as shown in FIG. 18B, the support convex portion 850 has a supported surface 452 that is formed at the lower side and is perpendicular to the opposed surface 434C, and an inclined surface 454 that is formed at the upper side and is inclined relative to the opposed surface 442C.

The fuel tank 832 of the sixth embodiment can be produced by substantially the same production method as the fuel tank 32 of the first embodiment. In the sixth embodiment, in particular, the sub-tank 434 is placed on the fused resin sheet 74 expanded in the forming die 112, and the opposed surface 434C of the sub-tank 434 is pushed into the fused resin sheet 74, so that each of the support convex portions 850 penetrates into the fused resin sheet 74 that is in the fused state. As a result, support concave portions 860 each having a shape corresponding to that of the support convex portion 850 are formed in the fused resin sheet 74. In particular, support surfaces 462 that are opposed to the supported surfaces 452 and support the supported surfaces 452 are formed in the fused resin sheet 74.

Accordingly, in the sixth embodiment, the support convex portions 850 are supported by the support surfaces 462, thereby to be attached to the fuel tank body.

Thus, in the sixth embodiment, the support convex portions 850 are formed on the sub-tank 434, so that the support concave portions 860 can be formed on the fuel tank body 34 side (in the fused resin sheet 74), and the sub-tank 434 can be supported, during production of the fuel tank. Since the load of the sub-tank 434 applied to the caulking portions 46 is small, deformation of the caulking portions 46 can be curbed even when the caulking portions 46 are in the fused state. Thus, the sub-tank 434 can be firmly fixed to the fuel tank body 34, and displacement of the sub-tank 434 can be curbed.

Furthermore, there is no need to form a support portion(s) on the fuel tank body 34, or increase the number of the caulking portions 46, in order to curb deformation of the caulking portions 46; therefore, the fuel tank 32 can be produced at low cost.

In the fuel tank of each embodiment, it is desirable that the sum of the supportable load of the support member and the supportable load of the caulking portions 46 is larger than the own weight of the mounted part, during production of the fuel tank, in particular, during formation of the caulking portions 46, so as to surely support the mounted part and curb deformation of the caulking portions 46. The "supportable load" of the support member mentioned herein is the maximum value of the load that can be supported by the support member when the support member supports the load of another member (mounted part in each of the above embodiments). The "supportable load" of the caulking portions 46 is the maximum value of the load that can be supported by the caulking portions 46 in the fused state without causing deformation of these caulking portions 46, when the caulking portions 46 support the load of another member (mounted part in each of the above embodiments).

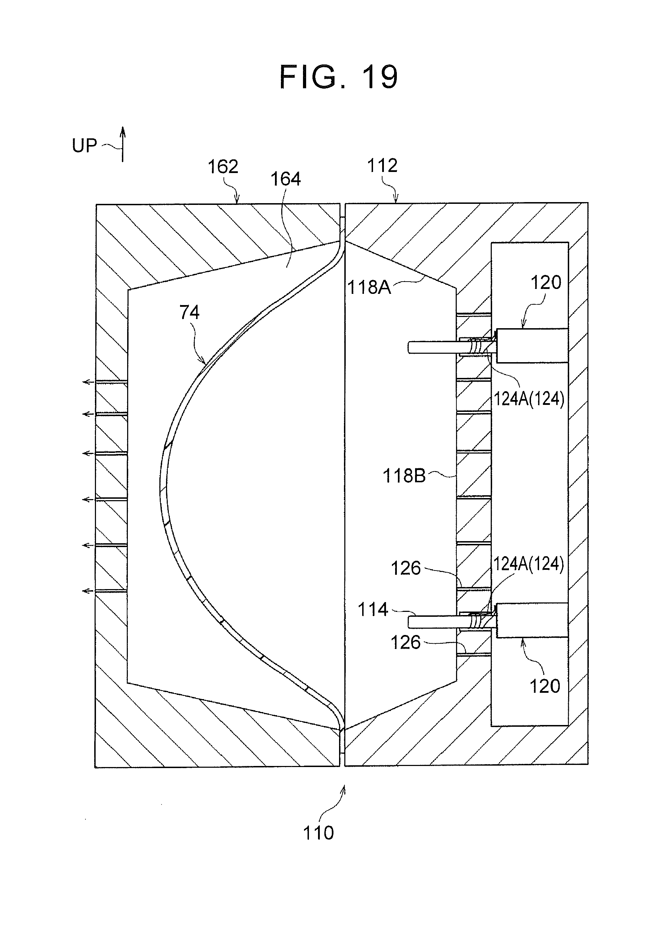

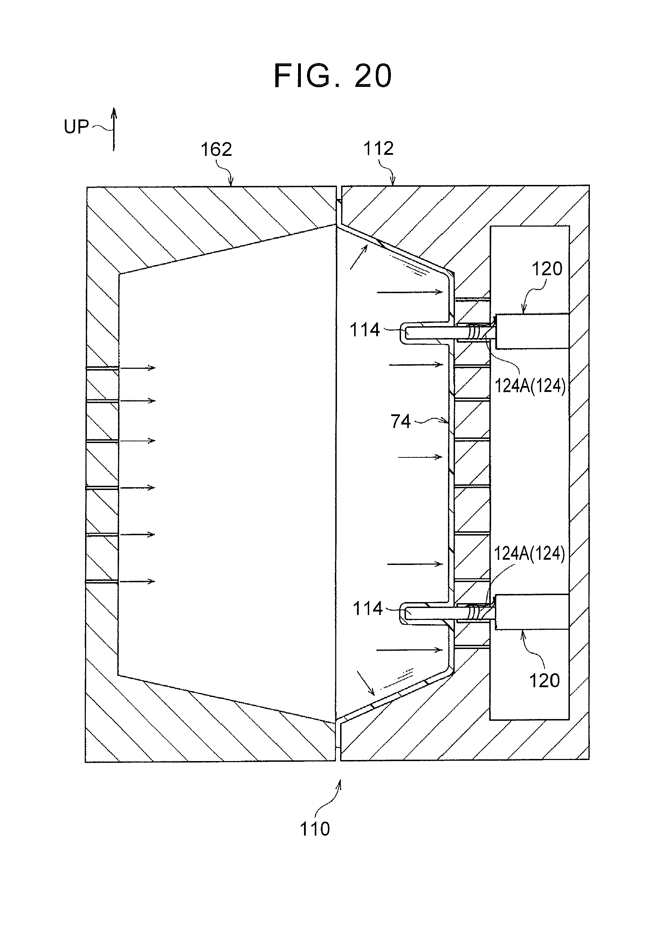

In the method for producing the fuel tank of each of the above-described embodiments, the pressure in the enclosed space 130 is increased so as to expand the fused resin sheet 74 in the shaping process, and the pressure in the enclosed space 130 is reduced so that the expanded fused resin sheet 74 is placed along the cavity surface 118A. However, the method of expanding the fused resin sheet 74 and placing the fused resin sheet 74 along the cavity surface 118A is not limited to the above-described method. For example, as shown in FIG. 19 and FIG. 20, a pressure forming die 162 that is opposed to the forming die 112 may be used. In this structure, an enclosed space 164 is formed between the pressure forming die 162 and the fused resin sheet 74. Then, the pressure in the enclosed space 164 is reduced, so as to expand the fused resin sheet 74, as shown in FIG. 19. Then, the pressure in the enclosed space 164 is increased, so that the fused resin sheet 74 is placed along (and tightly attached to) the cavity surface 118A, as shown in FIG. 20.

In the method for producing the fuel tank of each of the above-described embodiments, the tank component 34A and the tank component 34B are formed by separate molding devices, and the tank components 34A, 34B are then joined together to form the fuel tank body 34. However, the method of forming the fuel tank body 34 is not limited to the above-described method. For example, a forming die for forming the tank component 34A, and the forming die 112 for forming the tank component 34B may be provided, and the fuel tank body 34 may be formed by joining the forming dies together before the tank component 34A and the tank component 34B are released or detached from the respective forming dies.

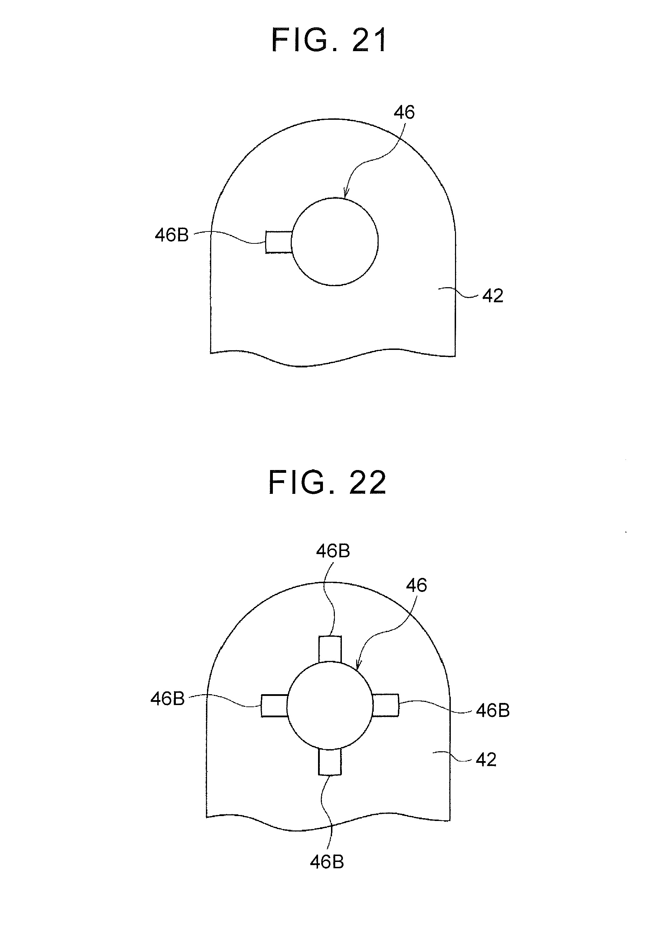

In the fuel tank of each of the above-described embodiments, the extended piece 46B is formed over the entire circumference along the outer periphery of the caulking portion 46. However, the extended piece 46B may be formed partially in the circumferential direction, at the outer periphery of the caulking portion 46. For example, one extended piece 46B may be formed on the outer periphery of the caulking portion 46, as shown in FIG. 21. In another example shown in FIG. 22, two or more (four in the example of FIG. 22) extended pieces 46B may be formed at fixed intervals in the circumferential direction, along the outer periphery of the caulking portion 46. With these arrangements, the amount of resin needed for forming the caulking portions 46 and the extended pieces 46B can be reduced.

In each of the above-described embodiments, the invention can be particularly preferably applied to the structure in which the thickness of resin that forms the fuel tank body 34 is reduced. Namely, when the resin that forms the fuel tank body 34 is thin, the thickness of the fused resin sheet 74 is also small during production; therefore, if any caulking portion 46 is deformed, the fused resin sheet 74 is likely to be affected by the deformation. In each of the above-described embodiments, deformation of the caulking portions 46 can be curbed; therefore, the fuel tank body 34 having a small thickness can be formed into a desired shape, and the mounted part can be firmly fixed to the fuel tank body 34.

The fixing portion for fixing the mounted part to the fuel tank body is not limited to the above-described caulking portion. For example, even if the process (caulking process) of pressing the resin projection 76 with the pressure member 116 as shown in FIG. 7 and FIG. 8 is not conducted, the resin projection 76 may be arranged to be hung on or engaged with the hole edge of the mounting hole 44, so that the mounted part is fixed to the fuel tank body.

## Claims

1. A fuel tank **characterized by** comprising:
a fuel tank body (34) that is made of thermoplastic resin, and is adapted to store fuel in the fuel tank body;
a mounted part (38) that is mounted on the fuel tank body (34), and is formed of a material that is different from a material of the fuel tank body (34);
a fixing portion (46) formed in the fuel tank body (34) by deforming a part of the thermoplastic resin that forms the fuel tank body (34), so as to fix the mounted part (38) to the fuel tank body (34); and
a support member (50) formed separately from the fuel tank body (34) and the fixing portion (46), the support member (50) being attached to the fuel tank body (34) and supporting the mounted part (38).

2. The fuel tank according to claim 1, wherein the support member (50) is embedded in and attached to the fuel tank body (34).

3. The fuel tank according to claim 1 or 2, wherein the support member (50) and the fuel tank body (34) have contact surfaces that are in contact with each other, the contact surfaces being formed of the same material.

4. The fuel tank according to any one of claims 1 to 3, wherein the support member (50) is a separate body from the mounted part (38), and is coupled to the mounted part (38).

5. The fuel tank according to claim 4, further comprising a coupling member that couples the mounted part (38) with the support member (50).

6. The fuel tank according to claim 5, wherein the coupling member has an engaging portion provided on one of the mounted part (38) and the support member (50), and an engaged portion (48) provided on the other of the mounted part (38) and the support member (50).

7. The fuel tank according to claim 6, further comprising a fastened seat (42) that is formed on the mounted part (38) and is fixed to the fuel tank body (34) by the fixing portion (46), wherein
the engaged portion (48) has a pair of erected portions (48B) that extend upward from the fastened seat (42), and a connecting portion (48C) that connects the erected portions (48B) to each other;
the support member (50) includes a support plate body (56) in the form of a flat plate attached to the fuel tank body (34), and an opposed plate (58) that cooperates with the support plate body (56) to form a gap in which the connecting portion (48C) is received; and
the engaging portion comprises a claw piece (64) that protrudes from one of the support plate body (56) and the opposed plate (58) to the other, the claw piece (64) being engaged with the connecting portion (48C) received in the gap.

8. The fuel tank according to any one of claims 1 to 4, further comprising a fastened seat (42) that is formed on the mounted part (38) and is fixed to the fuel tank body (34) by the fixing portion (46), wherein
the support member (50) comprises an engaging pin (354) that is inserted through and engaged with an engaging hole of the fastened seat (42).

9. The fuel tank according to claim 1 or 2, wherein:
the support member (50) comprises at least one convex portion that protrudes from a contact surface of the mounted part (38) which is in contact with the fuel tank body (34); and
a support surface that supports each of said at least one convex portion is formed in a contact surface of the fuel tank body (34) which is in contact with the contact surface of the mounted part (38).

10. The fuel tank according to claim 9, wherein said at least one convex portion comprises a plurality of convex portions.

11. The fuel tank according to claim 10, wherein the plurality of convex portions are located at positions surrounding the fixing portion (46).

12. The fuel tank according to any one of claims 1 to 11, wherein the support member (50) supports the mounted part (38) in a direction along a mounting surface (34D) at which the mounted part (38) is mounted on the fuel tank body (34).

13. A method for producing a fuel tank, **characterized by** comprising:
pressing a mounted part (38) to be mounted on a fuel tank body (34), against resin that forms the fuel tank body (34), while the resin is in a fused state; and
forming a fixing portion (46) in the fuel tank body (34) and fixing the mounted part (38) to the fuel tank body (34) while supporting the mounted part (38) against the fuel tank body (34), using a support member (50) formed separately from the fuel tank body (34), and then forming the fuel tank body (34) into a box shape.

14. The method for producing the fuel tank according to claim 13, wherein the fixing portion (46) is formed, in a condition in which a mounting surface (34D) at which the mounted part (38) is mounted on the fuel tank body (34) extends in a vertical direction.

15. The method for producing the fuel tank according to claim 14, wherein, during formation of the fixing portion (46), the support member (50) supports the mounted part (38), at an upper side of a portion in which the fixing portion (46) is formed.
